Europäisches Patentamt

European Patent Office

Office européen des brevets

(11) Publication number: **0 300 336**
**A2**

(12) **EUROPEAN PATENT APPLICATION**

(21) Application number: **88111166.0**

(22) Date of filing: **12.07.88**

(51) Int. Cl.⁴: **G11B 23/00 , G11B 17/028 ,
G11B 19/20**

(30) Priority: **22.07.87 CS 5525/87**
**22.07.87 CS 5526/87**

(43) Date of publication of application:
**25.01.89 Bulletin 89/04**

(84) Designated Contracting States:
**AT DE FR GB IT NL**

(71) Applicant: **SLOVENSKA AKADEMIA VIED**
**Obráncov mieru 49**
**Bratislava(CS)**

(72) Inventor: **Kocis, Ivan**
**Kuklovska 54**
**Bratislava(CS)**

(74) Representative: **Patentanwälte Beetz sen. -
Beetz jun. Timpe - Siegfried -
Schmitt-Fumian- Mayr
Steinsdorfstrasse 10
D-8000 München 22(DE)**

(54) **Disc recording medium and equipment for its rotary and linear motion.**

(57) The solution concerns the disc recording medium consisting of the disc of the recording medium which is furnished with a ring armature on its periphery and it is accomodated in magnetic suspension allowing rotary recording or sensing motions, as well as linear one. The disc position of the recording medium is scanned by position sensors.

FIG. 1

## Disc recording medium and equipment for its rotary and linear motion.

This invention pertains to a disc recording medium intended largely for optical memories and to the equipment for its rotary and linear motion.

The hitherto available disc recording media have driven by attachment in the centre off the disc recording medium, being accommodated in a rotary manner on precision bearings. Often, the bearings function is combined with the drive motor function. The recording and read heads perform motion of their own above the entire active area of the disc recording medium and are furnished with a drive of their own to ensure this activity. The weight of optical recording and read heads is considerably greater than that of magnetic recording and read heads, generally, optical discs memories are noted for longer access times than magnetic disc memories. A common drawback of the available media and equipment for optical and magnetic recording, besides the limited number of freedom degrees, is the necessity of two self-contained drives, one providing the recording medium drive and the other the head drive. Another drawback is their sensitivity to vibrations and wear of mechanical parts and drives. Therefore, there is a general trend to transform the majority of technical principles, i.e. parts, into electronic parts/functions.

The above mentioned drawbacks are markedly eliminated by disc recording medium with the equipment for rotary and linear motion according to this invention. The principle is based on the fact that the disc recording medium is fitted with a ring armature on the periphery. Stators of a linear drive and suspension magnetic fields are located on the opposite sides of the recording medium disc. The recording and read heads are located above the active area of the disc recording medium. The area between the stators of the linear drive and suspension magnetic fields accommodates at least two sensors for sensing a disc recording medium axial position. The working space lengths of the sensor of the recording medium disc axial position and electromagnetic components of the suspension and directive forces, located above/under disc recording medium, are comparatively greater rela tive to the disc recording medium, than the distance of the two extreme positions of the disc recording medium centre at its linear motion.

The main advantage of the invention is that it permits the use of new drive principles (e.g.magnetic suspension), utilizing several freedom degrees of the moving disc recording medium. Another advantage consists in mechanical enforcement of the disc recording medium and improved prevention from damage. The disc recording medium with the equipment allow to substitute majority of mechanical principles for electronic ones, except of inevitable relative motion of the recording and read heads relative to the recording medium. As a result of the mechanics simplification, production of the equipment is simple and economically convenient. The introduction of electronic feedbacks permits a higher allowance on mechanical inaccuracies of the disc recording medium and the stator components. i.e. changes in the parts parameters at operation. The parts subject to wear are basically eliminated. Another asset is combining the disc recording medium drive with the function of the record head motion relative to the recording medium along its tracks and the elemination of the actual advance of the recording head. Last, but not least,the entire system reliability is increased.

The enclosed diagrams show the disc recording medium with ring armatur and the equipment for its rotary and linear motion on an electromagnetic suspension.

Disc recording medium consist of a disc recording medium $1$ fitted with a ring armature $2$ on the periphery, containing e.g. ferromagnetic material. Armature $2$ interacts with alternate magnetic field of the stator $3$ of the drive system. In this manner, magnetic suspension of a disc recording medium with motion facility in several degrees of freedom is provided. The armature $2$ can be provided not only as a continuous ring, but also in the form of ring segments, at least of two of them.

The disc recording medium for effect increasing can contain the disc armature $8$ in the center, containing e.g. ferromagnetic material for certain suspension manner.

The equipment for rotary and linear motions of the disc recording medium on the electromagnetic suspension consists of the disc 1 of the recording medium furnished by a ring on its periphery containing e.g. ferromagnetic material serving as rotor armature. The ring contains some unhomogenities for effect increasing, e.g. those with low material conductance. Above and possibly also beneath the diametrically opposed sides of the disc recording medium the stator $3$ of linear displacement drive and suspension magnetic fields is accomodated. The stator creates a linear displacement magnetic field, similarly to linear motors of known design (e.g. to a line developed stator form of an asynchronous motor or multiphase synchronous motors, etc.). The recording and read head $4$ within active positions of the disc recording medium is always located above its active area. The area between the stators $3$ of linear displacement and suspension magnetic fields above or under the recording medium accomodates at least two axial position sensors of the disc 1 of the recording medium (e.g. that of inductive, optical or capacitive type) with active area with its lehgth equal to that of the linaer displacement extent of the disc recording medium, and at least two electromagnetic elements 6 of directive and suspension forces as well as sensors 7 of the disc recording medium extreme positions.

Functionwise, the disc 1 recording medium performs two kinds of motion relative to recording and read head 4, i.e. rotary recording motion/sensing motion along the particular track, as well as linear motion from one track to another adressed track. The equipment performs these motions within the framework of a single drive system. Disc 1 of the recording medium, furnished with a ring armature 2 on the periphery serving as a drive rotor is suspended in a magnetic field generated by stators 3 of the linear displacement and suspension magnetic fields. The position of disc 1 recording medium is roughly controlled by signals from axial position sensors 5 of the disc 1 recording medium, by parameters of linear displacement drive and suspension magnetic fields of stators 3 and in co-ordination with electromagnetic elements 6 of directive and suspension forces. If a displacement drive electromagnetic field of mutually opposite directions is generated on stators 3 of linear displacement drive and suspension magnetic fields, the disc 1 shall commence rotating at appropriate revolutions through an interaction with ring armature 2.The fine control of the displacement velocity of these magnetic fields maintains the required position of disc 1 recording medium with the ring armature 2. The precise feedback signals of axial position of the disc recording medium for magnetic suspension, as well as for the position of the disc 1 recording medium in direction of the linear displacement and for velocity of its rotation are derived from the processed information with help of recording and read head 4. A change in the velocity of displacement magnetic fields of stators 3 of linear displacement drive and suspension magnetic fields and their orientation will ensure the advance of the disc 1 recording medium parallelly to stators 3 of linear displacement and suspension magnetic fields. The extreme positions of disc 1 recording medium are indicated by extreme positions sensors 7. These are utilized in the phase of system activation, while the signals from the recording and read heads 4 are not available. In systems with removable disc 1 recording medium the magnetic fields of stators 3 of linear displacement and suspension magnetic fields and their orientation are utilized in loading disc 1 recording medium to its operation position at start-of-operation and unloading disc 1 recording medium from the equipment at end-of-operation. Recording and read heads 4 are accommodated in electromagnetic or piezoelectric systems for precision positioning relative to disc 1 recording medium.

The invention is widely applicable in computer disc memories in general, particularly in optical as well as special memories intended for highly reliable applications under terrestrial and outer space conditions, and also in systems of consumer electronics in audio and video systems.

1... disc recording medium

2... ring armature

3... stator or linear discplacement drive and Suspension magnetic fields

4... recording and read head

5... axial position sensors

6... electromagnetic elements of directive and suspension forces

7... extreme positions sensors

8... disc armature

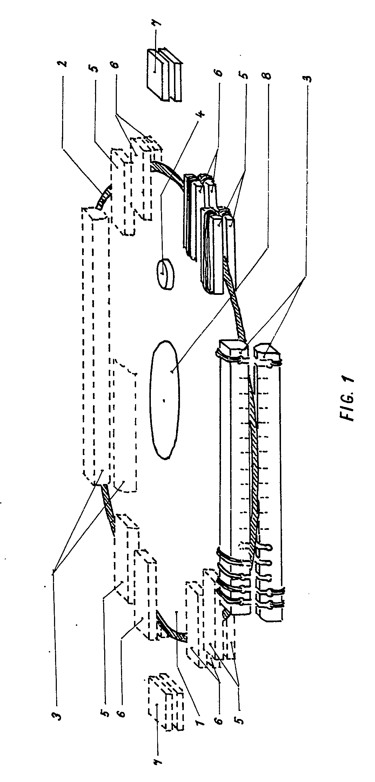

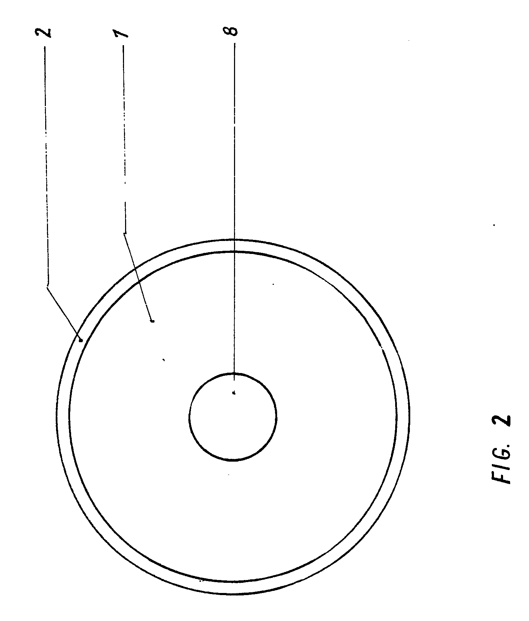

## Claims

1. Disc recording medium characterized by the fact that the disc (1) is furnished by a ring armature (2) on its periphery.

2. Disc recording medium according to claim 1 characterized by fact that it is furnished by armature and suspension elements in form of ring segments for transmission of driving force at least at two points of the disc (1) recording medium periphery.

3. Disc recording medium according to claims 1 and 2 characterized by a ring armature (8) for attachment in magnetic suspension, located in the middle of the disc (1) recording medium.

4. The equipment for rotary and linear motion of a disc (1) recording medium according to the claims 1, 2 and 3 characterized by stators (3) of linear displacement and suspension magnetic magnetic fields which are located above and possibly also beneath diametrically opposed sides of the disc (1) recording medium furnished by a ring armature (2) on its periphery, as well as by recording and read heads (4) accommodated above the active area of disc (1) recording medium, and a minimum of two axial position sensors (5) of disc (1) recording medium at least two electromagne tic elements (6) of directive and suspension forces, and a minimum of two extreme position sensors (7), which are accommodated in the area between the stators (3) of linear displacement and suspension magnetic fields, whereby the lenghts of the sensor (5) working area for disc (1) recording medium position and electromagnetic elements (6) of directive and suspension forces are greater comparatively to disc recording medium than the distance of the two extreme positions of the disc recording medium center at motion in the working area.

FIG. 1

FIG. 2